# EUROPÄISCHE PATENTSCHRIFT

(11) **EP 4 249 081 B1**
(45) Veröffentlichungstag und Bekanntmachung des Hinweises auf die Patenterteilung: **29.01.2025**
(21) Anmeldenummer: 23161958.6
(22) Anmeldetag: 15.03.2023
(51) Int. Cl.: A62B 35/00, B64D 17/30, F03D 80/50, A62B 1/22, F03D 1/00, F03D 80/00

(54) **VORRICHTUNG ZUR RETTUNG EINER PERSON VON EINER WINDKRAFTANLAGE SOWIE WINDKRAFTANLAGE**
DEVICE FOR RESCUING A PERSON FROM A WIND TURBINE, AND A WIND TURBINE ITSELF
DISPOSITIF DE SAUVETAGE D'UNE PERSONNE D'UNE EOLIENNE ET EOLIENNE

(30) Priorität: 24.03.2022 LU 501703
(43) Veröffentlichungstag der Anmeldung: 27.09.2023
(73) Patentinhaber: Paratec Fallschirmbau - Technik - Service Vertrieb GmbH, 66798 Wallerfangen (DE)
(72) Erfinder: ERTLER, Stefan, 57320 Neunkirchen les Bouzonville (FR)
(74) Vertreter: Zeiner, Johannes Michael

(56) Entgegenhaltungen:
- CN-A- 111 284 708
- DE-A1- 10 252 044
- DE-A1- 102020 122 665
- DE-A1- 19 947 650
- GB-A- 282 900
- US-A- 1 385 773
- US-A- 2 719 686
- US-A1- 2009 127 396
- US-A1- 2013 037 347
- US-B2- 11 260 980

## Beschreibung

Die Erfindung betrifft eine Vorrichtung zur Rettung einer Person von einer Windkraftanlage, die einen Fallschirm sowie ein von der zu rettenden Person anlegbares, mit dem Fallschirm verbindbares oder verbundenes Gurtzeug aufweist, wobei die Rettungsvorrichtung eine Aufziehleine umfasst, die zur Verbindung der Rettungsvorrichtung mit der Windkraftanlage eingerichtet ist. Ferner betrifft die Erfindung eine Windkraftanlage mit einer solchen Rettungsvorrichtung.

Bei Windkraftanlagen befinden sich regelmäßig zu wartende Bauteile üblicherweise in der Gondel, das heißt in dem Maschinenhaus. Bei einem Notfall, der beispielsweise ein Brand in der Gondel sein kann, muss sich Wartungspersonal entweder außerhalb der Gondel in Richtung Boden an Rettungsseilen abseilen oder auf helikopterunterstütze Rettung warten. Breitet sich das Feuer schnell aus, treffen Rettungskräfte häufig zu spät ein oder Rettungsseile brennen durch und die sich daran abseilenden Personen stürzen aus großer Höhe in den Tod.

Dadurch, dass moderne Windkraftanlagen, ob On- oder Off-Shore, immer leistungsstärker und damit größer und höher werden, sind neue Rettungsmöglichkeiten erforderlich, um Wartungspersonal bei einem Notfall schnell von der Windkraftanlage, das heißt aus der Gondel oder aus hohlen Rotorblättern, evakuieren zu können.

Aus DE 102 52 044 A1 ist ein Rettungssystem für in großer Höhe in Gefahr befindliche Personen bekannt. Beschrieben ist ein rucksackähnliches Gurtzeug 9 mit eingebautem Rettungsfallschirm und einer Sicherheitsleine 4. Die Sicherheitsleine 4 weist ferner an einem Ende eine Befestigungsschlaufe 7 auf, die um eine Verankerung herumgeschlungen werden kann.

US 2013/037347 A1 beschreibt einen Fallschutzgurt. Ein oberer Brustgurt 4 ist mit einem mehrteiligen Verbindungsverschluss 7 ausgestattet, dessen Verschlussteile 7a und 7b nach dem Umschlingen eines bestimmten Körperteils des Trägers, beispielsweise in einem Brustberiech, miteinander verbindbar sind. Aus US 2013/037347 A1 sind jedoch weder ein Fallschirm noch ein Gurtzeug für einen Fallschirm bekannt. Auch zeigt US 2013/037347 A1 keine Rettungsvorrichtung, die zur Rettung einer Person von einer Windkraftanlage geeignet ist.

Der Erfindung liegt die Aufgabe zugrunde, eine Vorrichtung zur Rettung einer Person von einer Windkraftanlage zu schaffen, durch die eine schnelle Notfallevakuierung möglich ist.

Erfindungsgemäß wird die Aufgabe dadurch gelöst, dass das Gurtzeug zwei Beingurte und einen mit den beiden Beingurten verbindbaren Körpergurt umfasst, wobei die Beingurte die Oberschenkel einer die Rettungsvorrichtung benutzenden Person in Umfangsrichtung umgeben und in ihrer Umfangsgröße nicht veränderbar sind, sondern einen Umfang aufweisen, der für verschieden große Beinumfänge geeignet ist.

Dadurch ist eine Verwendung durch Personen mit verschieden dicken Beinen vorteilhaft möglich.

Weiter vorteilhaft wird durch die Beingurte und den Körpergurt ein Gurtzeug geschaffen, das eine zu rettenden Person auf einfach Art und Weise anlegen kann.

Die Beingurte sind herstellbar, indem ein erstes Ende eines Gurtstücks und ein Endbereich eines zweiten Endes des Gurtstücks miteinander vernäht werden.

Jeder Beingurt ist insbesondere durch eine Schlaufe, durch die der Körpergurt hindurchgeführt ist, und durch ein Einstellmittel, durch das eine effektive Länge des Körpergurts beim Anlegen einer erfindungsgemäßen Rettungsvorrichtung einstellbar ist, mit dem Körpergurt verbunden. Das Einstellmittel kann beispielsweise einen Gurtschieber umfassen.

Denkbar ist, dass der Endbereich eines Endes eines Gurtstücks, der mit einem anderen Ende des Gurtstücks zur Bildung des Beingurts verbunden, vorzugsweise vernäht ist, mit dem Einstellmittel verbunden ist.

Ferner liegt der Erfindung die Aufgabe zugrunde, eine Vorrichtung zur Rettung einer Person von einer Windkraftanlage zu schaffen, die besonders einfach anzulegen ist.

Außerdem schafft die Erfindung eine Windkraftanlage, die eine schnelle Notfallevakuierung ermöglicht.

Dadurch, dass die erfindungsgemäße Rettungsvorrichtung einen Fallschirm aufweist, ist zur Rettung von Wartungspersonal eine Evakuierung durch einen Sprung aus der Gondel oder einer Öffnung der Windkraftanlage heraus möglich. Durch die Aufziehleine, durch die die Rettungsvorrichtung mit der Windkraftanlage verbindbar und nach fachmännischer Installation permanent verbunden ist, wird der Fallschirm ohne Eingriff eines Benutzers bei einem Sprung geöffnet, so dass die erfindungsgemäße Rettungsvorrichtung bereits ab Sprunghöhen von 70 m verwendbar ist.

Idealerweise weist eine Windkraftanlage so viele Rettungsvorrichtungen auf wie Wartungspersonal gleichzeitig mit Wartungsarbeiten beschäftigt sein kann.

Windkraftanlagen befinden sich üblicherweise an Orten, an denen hinreichend Wind vorhanden ist, so dass die Rettungsvorrichtung benutzendes Wartungspersonal vorteilhaft am Fallschirm hängend von der Windkraftanlage und damit einem Gefahrenbereich weggetrieben wird.

Zweckmäßigerweise ist der Körpergurt einstückig ausgebildet. Einstückig bedeutet insbesondere, dass keine Verbindungen wie Nähte bestehen, die einzelne Gurtabschnitte miteinander verbinden, sondern der Körpergurt aus einem einzigen Gurtband gebildet ist. Vorteilhaft sind keine möglichen Bruchstellen vorhanden, das heißt solche Stellen, an denen eine Naht aufreißen könnte.

In einer Ausgestaltung der Erfindung weist jeder Beingurtjeweils eine Schlaufe auf, durch die der Körpergurt hindurchgeführt ist.

Die Schlaufe weist insbesondere eine konstante Größe auf und ist in ihrer Größe außerdem nicht veränderbar. Dadurch, der Körpergurt durch die Schlaufen hindurchgeführt wird, ist beim Anlegen der Rettungsvorrichtung deren Anpassung an einen Körper einer zu rettenden Person möglich. Beispielsweise würden die Schlaufen beim Anlegen der Rettungsvorrichtung und deren Anpassung an einen Körper der die Rettungsvorrichtung benutzenden Person nach oben, also in Richtung des Kopfes der Person derart bewegt, dass die Beingurte so lange mitgezogen werden, bis diese insbesondere im Schritt fest um die Beine der Person herumgeschlungen sind.

Insgesamt wird ein an eine zu rettende Person anpassbares Gurtzeug und damit eine an diese Person anpassbare Rettungsvorrichtung geschaffen.

In einer Ausgestaltung der Erfindung ist das Gurtzeug an einen Körper der zu rettenden Person anpassbar, insbesondere an eine Körperform und/oder Körpergröße. Vorzugsweise ist das Gurtzeug an eine Körperlänge und einen Körperumfang anpassbar.

Vorteilhaft ist keine individuelle Rettungsvorrichtung für jede zu rettende Wartungsperson erforderlich, sondern eine einzige universell nutzbare, die permanent in der Windkraftanlage installiert sein kann. Durch die permanente Installation wird weiter vorteilhaft sichergestellt, dass die Aufziehleine bestimmungsgemäß funktionieren kann und der Fallschirm sich in einem Notfall bei einem rettenden Sprung aus der Windkraftanlage heraus öffnet.

In einer weiteren Ausgestaltung der Erfindung sind die zwei Beingurte zur Anpassung des Gurtzeugs an den Körper einer zu rettenden Person, insbesondere deren Körperlänge, in proximaler Richtung bewegbar. In einer Grundstellung, in der die Rettungsvorrichtung in einer Windkraftanlage angebracht sein kann, ist der Körpergurt derart weit geöffnet, dass er von besonders großen oder kräftigen Personen anlegbar ist.

Ein Gurtzeug, welches die beiden Beingurte sowie einen vorzugsweise einstückigen Körpergurt aufweist, ist anlegbar, indem eine zu rettende Person in die beiden insbesondere nicht größenverstellbaren Beingurte einsteigt und den vorzugsweise einstückigen, mit den Beingurten verbundenen Körpergurt derart anlegt, dass Schultergurtabschnitte des Körpergurts auf beiden Schultern aufliegen. Nach dem Anlegen ist eine Anpassung des Gurtzeugs an Körpermaße einer zu rettenden Person, das heißt insbesondere einer Körperlänge und einen Körperumfang, erforderlich. Anpassung bedeutet ein Straffen des vorzugsweise einstückigen Körpergurts derart, dass dieser eng an den Körper der zu rettenden Person anliegt. Bei dieser Straffung wird eine effektive Länge des Körpergurtes, das heißt eine Gurtlänge, die den Körper tatsächlich umgibt, verringert, so dass die beiden Beingurte in proximaler Richtung, das heißt in Richtung des Oberkörpers, hochgezogen werden und die Beine im Schritt fest umschließen.

Vorteilhaft ist durch die proximale Bewegbarkeit der Beingurte eine Anpassbarkeit an eine Körperlänge, insbesondere eine Oberkörperlänge, der zu rettenden Person möglich ohne dass die Beingurte selbst in ihrer Größe veränderbar sein müssen.

Zweckmäßigerweise weist der Körpergurt zwei Körpergurtabschnitte auf, die sich auf einer dorsalen Seite kreuzen. Die Körpergurtabschnitte sind an einer Kreuzungsstelle übereinander angeordnet und liegen vorzugsweise aneinander an. Durch diese gekreuzte Anordnung wird eine besonders gute Fixierung der zu rettenden Person in dem Gurtzeug nach dessen Anpassung an deren Körper sichergestellt.

In einer Ausgestaltung der Erfindung ist der Körpergurt an einer Kreuzungsstelle von zwei sich auf einer dorsalen Seite kreuzenden Körpergurtabschnitten des Körpergurts mit dem Fallschirm verbunden. Eine besonders stabile Verbindung ist vorteilhaft möglich, insbesondere wenn ein aus einem Metall gebildetes Verbindungsmittel verwendet wird. Weiter vorteilhaft wird eine stabile Rettungsposition sichergestellt, bei der eine Landung mit den Füßen der zu rettenden Person voraus möglich ist. Verletzungen werden dadurch verhindert. Die Rettungsvorrichtung ist auch von Laien benutzbar, die keine Erfahrung im Fallschirmspringen haben.

Zweckmäßigerweise sind Endabschnitte des Körpergurts zur Anpassung des Gurtzeugs an einen Körper der zu rettenden Person, insbesondere deren Körperumfang sowie deren Körperlänge, bewegbar, vorzugsweise in einer Richtung, die eine ventrale und/oder eine laterale Bewegungskomponente aufweist. Durch Bewegung der Endabschnitte des vorzugsweise einstückigen Körpergurts ist eine Anpassung des Gurtzeugs an den Körper einer zu rettenden Person möglich, da dadurch eine effektive Gurtlänge soweit verkürzt wird, dass sich Beingurte in proximaler Richtung bewegen und der Körpergurt eng an den Körper der zu rettenden Person anliegt. Vorteilhaft wird eine Rettungsvorrichtung geschaffen, die lediglich durch Ziehen an zwei Endabschnitten vollständig an jede Körpergröße und Körperform anpassbar ist.

In einer weiteren Ausgestaltung der Erfindung umfasst der Körpergurt ein Verbindungsmittel, durch das Brustgurtabschnitte lösbar miteinander verbindbar sind. Das Verbindungsmittel kann als Steckschnalle mit einem Gurtschieber ausgebildet sein.

Eine Steckschnalle ist besonders einfach zu schließen. Durch den Gurtschieber ist eine effektive Länge des Körpergurts, insbesondere der Brustgurtabschnitte, veränderbar.

In einer Ausgestaltung der Erfindung ist der Fallschirm luft- und/oder flüssigkeitsdicht verpackt, vorzugsweise vakuumverpackt. Dazu kann ein Verpackungssack vorgesehen sein. Vor Umwelteinflüssen wie Feuchtigkeit ist der Fallschirm geschützt. Vorteilhaft ist eine permanente Installation in einer Windkraftanlage für mehrere Jahre ohne Wartung möglich.

In einer weiteren Ausgestaltung der Erfindung ist bzw. sind das Gurtzeug und/oder ein Verpackungssack, in dem sich der Fallschirm befindet, aus einem feuerfesten oder wenigstens feuerhemmenden Material gebildet. Vorteilhaft ist eine Benutzung im Brandfall ohne Beschädigung möglich, wobei feuerhemmend gemäß der deutschen DIN 4102-2 auszulegen ist.

Zweckmäßigerweise erstreckt sich ein einziger Gurtabschnitt des Körpergurts zumindest teilweise in einer Körperumfangsrichtung einer das Gurtzeug tragenden Person. Der Gurtabschnitt umgibt den Körper insbesondere teilweise auf Brusthöhe der Person und erstreckt sich vorzugsweise über einen Brustbereich, das heißt über eine Körpervorderseite.

Es wird eine Rettungsvorrichtung mit einer Dreipunktsicherung, zum Beispiel Schulter, Brust und Beine geschaffen, während aus dem Stand der Technik bekannten Rettungsvorrichtungen oder Sprungfallschirme stets eine Vierpunktsicherung aufweisen. Eine Vierpunktsicherung bedeutet, dass Schultern, Brust, Hüfte und Beine von einem Gurtzeug umgeben sind. Der Erfinder hat erkannt, dass eine Dreipunktsicherung ausreichend ist, damit eine die Rettungsvorrichtung benutzende Person in dem Gurtzeug nach einem rettenden Sprung aus einer Windkraftanlage hinreichend stabil gehalten werden kann. Außerdem ist ein solches Gurtzeug besonders schnell anlegbar und sehr schnell und auf einfache Art und Weise an einen Körper der Person anpassbar.

Eine erfindungsgemäße Windkraftanlage weist ein Mittel auf, das zur Befestigung einer Aufziehleine der Rettungsvorrichtung eingerichtet ist. Dies kann eine Öse sein oder eine Schiene, in die beispielsweise die Aufziehleine dauerhaft eingeklinkt wird. Zweckmäßigerweise befindet sich das Verbindungsmittel in der Nähe einer Ausgangsöffnung, durch die hindurch die Windkraftanlage nach Anlegen der Rettungsvorrichtung verlassen werden kann.

Aufgrund der immer größer werdenden Windkraftanlagen ist denkbar, dass erfindungsgemäße Rettungsvorrichtungen in hohlen Rotorblättern der Windkraftanlage vorhanden sind, so dass bei Wartungsarbeiten in einem Rotorblatt in einem Notfall ein Abspringen aus diesem heraus möglich ist.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Eine Windkraftanlage mit einer erfindungsgemäßen Rettungsvorrichtung,
- Fig. 2: eine erfindungsgemäße Rettungsvorrichtung in Draufsicht,
- Fig. 3: Details zum Anlegen einer erfindungsgemäßen Rettungsvorrichtung.

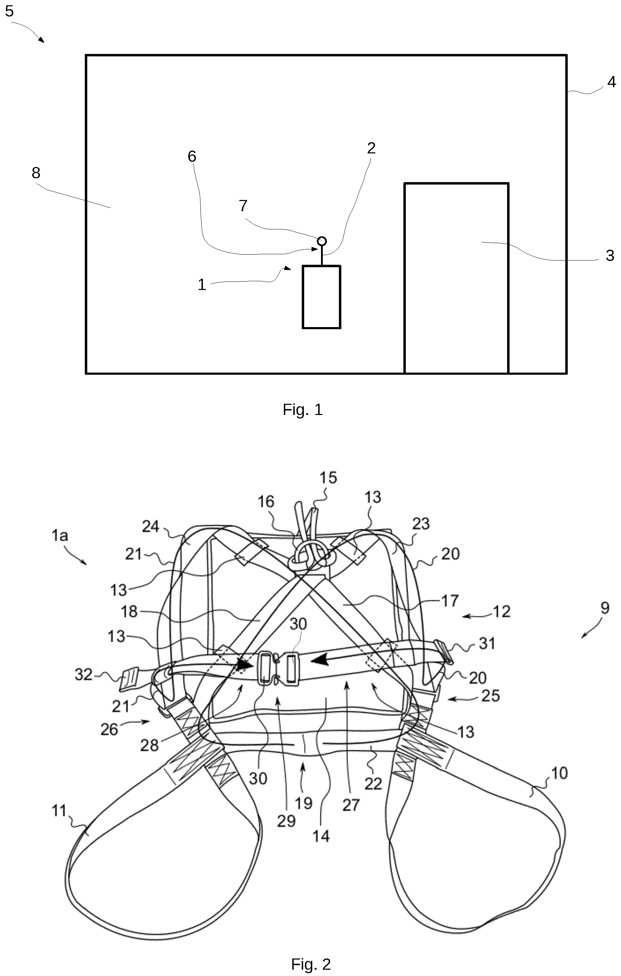

Ein in Fig. 1 schematisch gezeigte erfindungsgemäße Rettungsvorrichtung 1 umfasst eine Aufziehleine 2, durch die ein in Fig. 1 nicht gezeigter Fallschirm bei einem Sprung einer die Rettungsvorrichtung 1 tragenden Person durch eine Ausgangsöffnung 3 aus einer in Fig. 1 schematisch gezeigten Gondel 4 einer Windkraftanlage 5 heraus aufziehbar ist. Dazu ist ein der Gondel 4 zugewandtes Ende 6 der Aufziehleine 2 mit einem Ring 7, der an einer Wand 8 der Gondel 4 angebracht ist, verbunden, beispielsweise durch einen Karabinerhaken.

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Eine in Fig. 2 in perspektivischer Draufsicht auf eine dem Rücken einer die Rettungsvorrichtung 1a tragenden Person zugewandten Seite schematisch gezeigte Rettungsvorrichtung 1a umfasst ein Gurtzeug 9, das zwei Beingurte 10, 11 sowie einen in diesem Ausführungsbeispiel einstückigen Körpergurt 12 aufweist. Der Körpergurt 12 ist durch vier Schlaufen 13 mit einem Verpackungssack 14 verbunden, in dem sich ein Fallschirm befindet. Der Fallschirm weist eine Verbindungsleine 15 auf, die durch ein aus Metall gebildetes, geschmiedetes Verbindungselement 16 mit dem Körpergurt 12 verbunden ist. Dorsale Körpergurtabschnitte 17, 18 kreuzen sich an einer von dem Verbindungselement 16 gebildeten Kreuzungsstelle.

Das Verbindungselement 16 umfasst insbesondere zwei in Fig. 2 nicht im Detail gezeigte Ösen, von denen eine erste zur Verbindung mit der Verbindungsleine 15 und eine weitere zur Verbindung mit den dorsalen Körpergurtabschnitten 17, 18 des Körpergurts 12 eingerichtet ist.

Aus Gründen der Übersichtlichkeit ist in Fig. 2 keine Aufziehleine gezeigt.

Der Verlauf des einstückigen Körpergurts 12 um den Körper einer die Rettungsvorrichtung 1a tragenden Person wird nachfolgend ausgehend von einer auf den Körpergurt 12 aufgebrachten Mittellinie 19, die die Körpergurt 12 in zwei gleich große Gurtabschnitte teilt, sowie zwei mit Pfeilen 20 und 21 versehenen Verlaufslinien, erklärt.

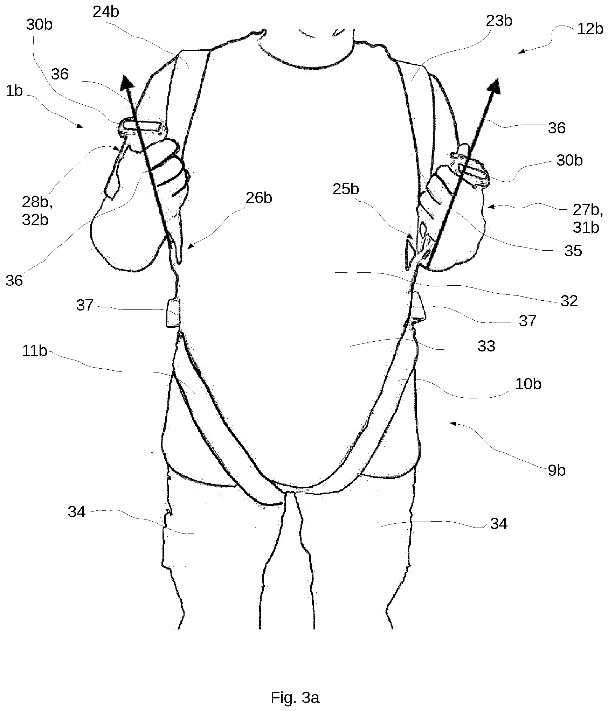

Ausgehend von der Mittellinie 19 erstreckt sich ein dritter dorsaler Gurtabschnitt 22 beidseitig der Mittellinie 19 in Richtung von in Fig. 2 nicht gezeigten und in Fig. 3a mit 37 bezeichneten Schlaufen in den Beingurten 10, 11, durch die dieser dritte dorsale Gurtabschnitt 22 hindurchgeführt ist, geht in die beiden sich kreuzenden dorsalen Körpergurtabschnitte 17, 18 über, die ihrerseits im Bereich des Verbindungselements 16 beidseitig in zwei Schultergurtabschnitte 23, 24 übergehen. Die Schultergurtabschnitte 23, 24 können eine Schulter einer die Rettungsvorrichtung 1b benutzenden Person von einer dorsalen zu einer ventralen Körperseite umgreifen. Die beiden Schultergurtabschnitte 23, 24 verlaufen auf ventraler Seite bis zu zwei Gurtschiebern 25, 26, die zur Umlenkung des Körpergurts 12 eingerichtet sind, wodurch die beiden Schultergurtabschnitte 23, 24 in zwei Brustgurtabschnitte 27, 28 übergehen.

Die Gurtschieber 25, 26 sind außerdem mit den Beingurten 10, 11 verbunden.

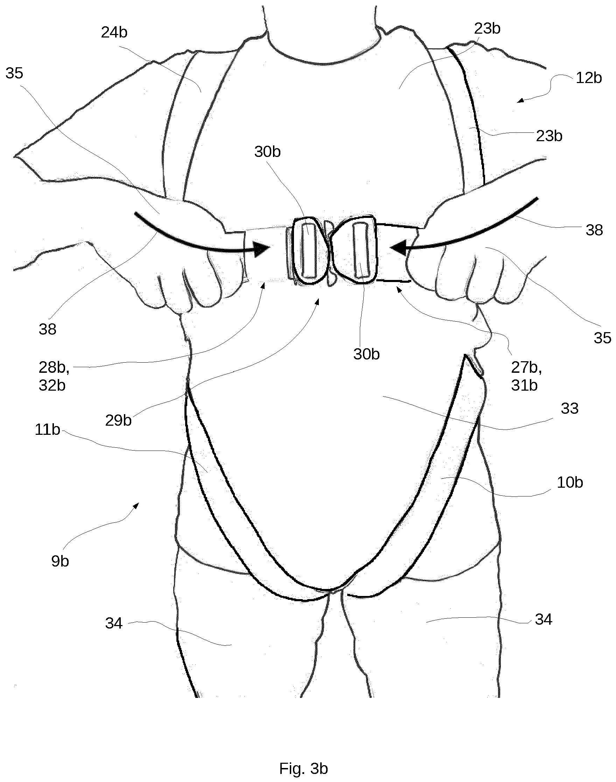

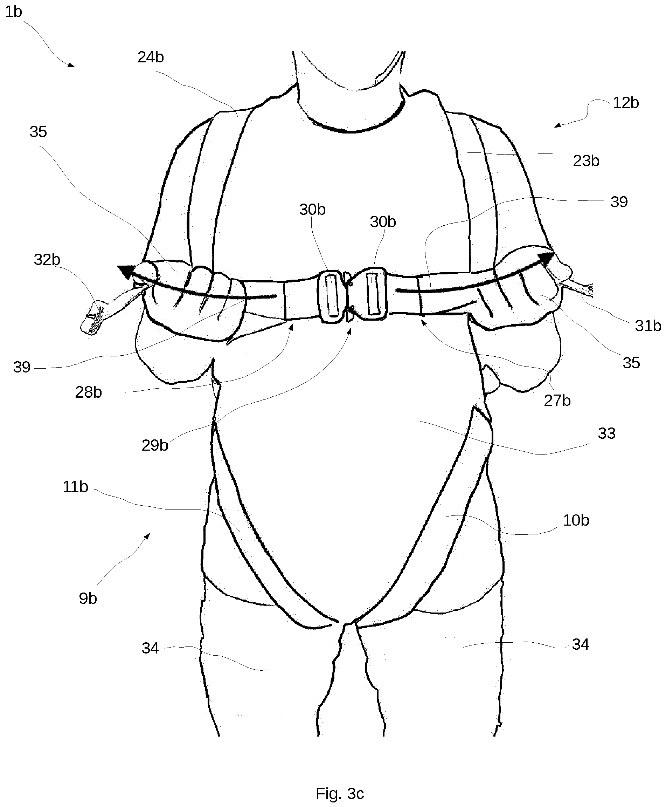

Der Körpergurt ist außerdem durch in Fig. 2 nicht gezeigte und in Fig. 3 mit 37 bezeichnete Schlaufen der Beingurte 10, 11 hindurchgeführt. Insgesamt sind die Beingurte 10, 11 an zwei Stellen mit dem Körpergurt 12 verbunden.

Die Brustgurtabschnitte 27, 28 sind durch eine zweiteilige metallische Steckschnalle 29 lösbar miteinander verbindbar. Die Steckschnalle 29 weist außerdem an jedem Steckschnallenteil einen Gurtschieber 30 auf. Die Gurtschieber 30 bilden einen Übergang von den Brustgurtabschnitten 27, 28 zu Endabschnitten 31, 32 des Körpergurts 12, die sich paarweise parallel zueinander erstrecken, das heißt in der in Fig. 2 gezeigten Draufsicht hintereinander angeordnet sind.

Die Endabschnitte 31, 32 bilden eine Längenreserve, wodurch der Körpergurt 12 an verschiedene Körpergrößen und -formen einer die Rettungsvorrichtung 1a benutzenden Person anpassbar ist.

Es versteht sich, dass die einzelnen Gurtabschnitte 17, 18, 23, 24 sowie 27, 28 unterschiedlich lang sein können, wobei deren Länge von den Körperabmessungen einer die Rettungsvorrichtung 1a benutzenden Person abhängig ist.

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Eine in Fig. 3a in Vorderansicht schematisch gezeigte Person 33 hat einen Körpergurt 12b einer Rettungseinrichtung 1b angelegt, das heißt Beine 34 sind in Beinschlaufen 10b, 11b und Schultergurtabschnitte 23b, 24b liegen auf die Schultern der Person 33 auf.

Durch gleichzeitiges Hochziehen von zwei Brustgurtabschnitten 27b, 28b und dazu parallelen Endabschnitten 31b, 32b, die von Händen 35 der Person umgriffen werden, in Richtung von Pfeilen 36, bewegen sich die beiden Beingurte 10b, 11b in proximaler Richtung, also in Richtung von Schultern der Person 33. Dadurch ist eine Längenanpassung an deren Körperlänge möglich, bis eine in Fig. 3a gezeigte Stellung erreicht ist, in der die Beingurte 10b, 11b im Schritt sowie an Schultern Person 33 anliegen.

Der einstückige Körpergurt 12b wird bei dieser Bewegung durch Schlaufen 37 der Beingurte 10b, 11b sowie in Fig. 3a nicht gezeigte, in Fig. 2 mit 25 und 26 bezeichnete Gurtschieber geführt hindurchgezogen. Dadurch wird dessen effektive Länge, das heißt eine Gurtlänge, die tatsächlich um den Körper der Person 32 herumgeschlungen ist, verkleinert.

Eine Fixierung einer in Fig. 3a gezeigten Gurtstellung ist durch die in Fig. 2 mit 25, 26 bezeichneten Gurtschieber möglich.

Eine in Fig. 3b und 3c in Vorderansicht schematisch gezeigte Person 33 hat einen Körpergurt 12b einer Rettungseinrichtung 1b angelegt und eine Längenanpassung wie in Fig. 3a gezeigt bereits vorgenommen. Eine Anpassung des Körpergurts 12b an einen Körperumfang der Person 33 erfolgt in zwei Schritten, wobei in einem ersten Schritt zwei Brustgurtabschnitte 27b, 28b und Endabschnitte 31b, 32b auf ventraler Seite medial in Richtung von Pfeilen 38 derart aufeinander zu bewegt werden, dass eine Steckschnalle 29b verschließbar ist.

In einem zweiten, in Fig. 3c gezeigten Schritt werden die Endabschnitte 31b, 32b lateral in Richtung von Pfeilen 39 gezogen, wodurch der Körpergurt 12b in Umfangsrichtung an den Körper 33 der Person angepasst wird und die Brustgurtabschnitte 27b, 28b fest an den Oberkörper der Person 33 anliegen.

Nach der Körperumfangsanpassung des Körpergurts 12b ist die Rettungseinrichtung 1b einsatzbereit, das heißt der Körpergurt 12b liegt hinreichend fest an den Körper der Person 33 an, so dass diese bei einem Sprung von einer Windkraftanlage, beispielsweise aus einer Gondel heraus, nicht aus der Rettungsvorrichtung 1b herausrutschen kann.

Eine Fixierung des Körpergurts 12b in einer in Fig. 3c gezeigten Gurtstellung ist durch die Gurtschieber 30b der Steckschnalle 29b möglich.

Die in in Fig. 2 mit 25, 26 bezeichneten Gurtschieber halten den körperlängenangepassten Körpergurt 12b in einer in Fig. 3a gezeigten Stellung, während die Gurtschieber 30b der Steckschnalle 29b einen körperumfangsangepassten Körpergurt in der in Fig. 3c gezeigten Stellung halten.

Durch die Erfindungslösung wird eine Rettungsvorrichtung 1-1b mit einer Dreipunktsicherung geschaffen, die außerdem in lediglich drei Schritten an den Körper 33 einer die Rettungsvorrichtung benutzenden Person anpassbar ist:
1) Körperlängenanpassung (Pfeile 36, Fig. 3a)
2) Verschließen der Steckschnalle 29; 29b (Pfeile 38, Fig. 3b)
3) Körperumfangsanpassung (Pfeile 39, Fig. 3c)

Es versteht sich, dass die erfindungsgemäße Rettungsvorrichtung 1-1b auch für einen Sprung aus einem hohlen Rotorblatt einer Windkraftanlage oder einem Sprung von einem Gebäude wie einem Hochhaus geeignet ist.

## Patentansprüche

1. Vorrichtung (1-1b) zur Rettung einer Person (33) von einer Windkraftanlage (5), die einen Fallschirm sowie ein von der zu rettenden Person (33) anlegbares, mit dem Fallschirm verbindbares oder verbundenes Gurtzeug (9; 9b) aufweist, wobei die Rettungsvorrichtung (1-1b) eine Aufziehleine (2) umfasst, die zur Verbindung der Rettungsvorrichtung (1-1b) mit der Windkraftanlage (5) eingerichtet ist, wobei das Gurtzeug (9, 9b) zwei Beingurte (10, 11; 10b, 11b) und einen mit den beiden Beingurten verbindbaren Körpergurt (12; 12b) umfasst, **dadurch gekennzeichnet, dass** die Beingurte (10, 11; 10b, 11b) die Oberschenkel einer die Rettungsvorrichtung benutzenden Person in Umfangsrichtung umgeben und in ihrer Umfangsgröße nicht veränderbar sind, sondern einen Umfang aufweisen, der für verschieden große Beinumfänge geeignet ist.

2. Rettungsvorrichtung nach Anspruch 1,
**dadurch gekennzeichnet,**
**dass** der Körpergurt (12; 12b) einstückig ausgebildet ist.

3. Rettungsvorrichtung nach Anspruch 1 oder 2,
**dadurch gekennzeichnet,**
**dass** jeder Beingurt (10, 11; 10b, 11b) jeweils eine Schlaufe (37) aufweist, durch die der Körpergurt (12; 12b) hindurchgeführt ist.

4. Rettungsvorrichtung nach einem der Ansprüche 1 bis 3,
**dadurch gekennzeichnet,**
**dass** das Gurtzeug (9; 9b) an einen Körper der zu rettenden Person (33) anpassbar ist, insbesondere an deren Körperform und/oder Körpergröße.

5. Rettungsvorrichtung nach einem der Ansprüche 1 bis 4,
**dadurch gekennzeichnet,**
**dass** die zwei Beingurte (10, 11; 10b, 11b)zur Anpassung des Gurtzeugs an den Körper einer zu rettenden Person (33), insbesondere deren Körperlänge, in proximaler Richtung (36) bewegbar sind.

6. Rettungsvorrichtung nach einem der Ansprüche 1 bis 5,
**dadurch gekennzeichnet,**
**dass** der Körpergurt (12; 12b) zwei Körpergurtabschnitte (27, 28; 27b, 28b) aufweist, die sich auf einer dorsalen Seite kreuzen.

7. Rettungsvorrichtung nach einem der Ansprüche 1 bis 6,
**dadurch gekennzeichnet,**
**dass** der Körpergurt (12; 12b) an einer Kreuzungsstelle von zwei sich auf einer dorsalen Seite kreuzenden Körpergurtabschnitten (27, 28; 27b, 28b) des Körpergurts (12; 12b) mit dem Fallschirm verbunden ist.

8. Rettungsvorrichtung nach einem der Ansprüche 1 bis 7,
**dadurch gekennzeichnet,**
**dass** Endabschnitte (31, 32; 31b, 32b) des Körpergurts (12; 12b) zur Anpassung des Gurtzeugs an einen Körper der zu rettenden Person (33), insbesondere deren Körperumfang sowie deren Körperlänge, bewegbar sind, vorzugsweise in einer Richtung, die eine ventrale und/oder eine laterale Bewegungskomponente aufweist.

9. Rettungsvorrichtung nach einem der Ansprüche 1 bis 8,
**dadurch gekennzeichnet,**
**dass** der Körpergurt (12; 12b) ein Verbindungsmittel (29; 29b) umfasst, durch das Brustgurtabschnitte (27, 28; 27b, 28b) lösbar miteinander verbindbar sind.

10. Rettungsvorrichtung nach einem der Ansprüche 1 bis 9,
**dadurch gekennzeichnet,**
**dass** der Fallschirm luft- und/oder flüssigkeitsdicht verpackt ist, vorzugsweise vakuumverpackt.

11. Rettungsvorrichtung nach einem der Ansprüche 1 bis 10,
**dadurch gekennzeichnet,**
**dass** das Gurtzeug (9; 9b) und/oder ein Verpackungssack (14), in dem sich der Fallschirm befindet, aus einem feuerfesten oder wenigstens feuerhemmenden Material gebildet ist bzw. sind.

12. Windkraftanlage (5), die eine Rettungsvorrichtung (1-1b) nach einem der Ansprüche 1 bis 11 aufweist.

13. Windkraftanlage nach Anspruch 12,
**dadurch gekennzeichnet,**
**dass** die Gondel (4) oder ein hohles Rotorblatt der Windkraftanlage ein Mittel (7) aufweist, das zur Befestigung einer Aufziehleine (2) der Rettungsvorrichtung (1-1b) eingerichtet ist.

14. Windkraftanlage nach Anspruch 13,
**dadurch gekennzeichnet,**
**dass** das Verbindungsmittel (7) im Bereich einer Ausgangsöffnung (3) der Gondel (4) oder des Rotorblatts angeordnet ist.

## Claims

1. Device (1-1b) for rescuing a person (33) from a wind turbine (5) comprising a parachute and a harness (9; 9b), which harness can be or is connected to the parachute, and which harness can be attached by the person to be rescued (33), wherein the rescue device comprises a static line (2) for connecting the rescue device (1-1b) to the wind turbine (5), wherein the harness (9, 9b) comprises two leg straps (10,11; 10b, 11b) and a body strap (12; 12b) which is connectable to the leg straps,
**characterized in that**
the leg straps (10, 11; 10b, 11b) surround the thighs of a person using the rescue device in circumferential direction and are not variable in their circumferential size, but have a circumference which is suitable for leg circumferences of different sizes.

2. Rescue device according to claim 1,
**characterized in that**
the body strap (12; 12b) is formed in one piece.

3. Rescue device according to claim 1 or 2,
**characterized in that**
each leg strap (10, 11; 10b, 11b) has a loop (37) through which the body strap (12; 12b) is guided.

4. Rescue device according to one of claims 1 to 3,
**characterized in that**
the harness (9; 9b) is adjustable to the body of the person to be rescued (33), in particular to their body shape and/or body size.

5. Rescue device according to one of claims 1 to 4,
**characterized in that**
the two leg straps (10, 11; 10b, 11b) are movable in proximal direction (36) to adjust the harness to the body of the person to be rescued (33), in particular to their height.

6. Rescue device according to one of claims 1 to 5,
**characterized in that**
the body strap (12; 12b) comprises two body strap sections (27, 28; 27b, 28b) which intersect on a dorsal side.

7. Rescue device according to one of claims 1 to 6,
**characterized in that**
the body strap (12; 12b) is connected to the parachute at a point of intersection of two body strap sections (27, 28; 27b, 28b) of the body strap (12; 12b), which body strap sections intersect on a dorsal side.

8. Rescue device according to one of claims 1 to 7,
**characterized in that**
end sections (31, 32; 31b, 32b) of the body strap (12; 12b) are movable to adapt the harness to a body of the person (33) to be rescued, in particular the body circumference and the body length thereof, preferably in a direction which has a ventral and/or a lateral movement component.

9. Rescue device according to one of claims 1 to 8,
**characterized in that**
the body strap (12; 12b) comprises a connecting element (29; 29b) through which chest strap sections (27, 28; 27b, 28b) are detachably connectable to each other.

10. Rescue device according to one of claims 1 to 9,
**characterized in that**
the parachute is packed such that it is airtight and/or impermeable to liquid, preferably vacuum-packed.

11. Rescue device according to one of claims 1 to 10,
**characterized in that**
the harness (9; 9b) and/or a packing bag (14), in which the parachute is located, is/ are made of a fire-resistant or at least fire-retardant material.

12. Wind turbine (5) comprising a rescue device (1-1b) according to any one of claims 1 to 11.

13. Wind turbine according to claim 12,
**characterized in that**
the nacelle (4) or a hollow rotor blade of the wind turbine has a means (7) which is designed for fastening a static line (2) of the rescue device (1-1b).

14. Wind turbine according to claim 13,
**characterized in that**
the fastening means (7) is located in a region of an exit opening (3) of the nacelle (4) or of the rotor blade.

## Revendications

1. Dispositif (1-1b) pour secourir une personne (33) d'une éolienne (5), comprenant un parachute et un harnais (9 ; 9b) pouvant être porté par la personne à secourir (33) et pouvant être relié ou connecté au parachute, dans lequel le dispositif de sauvetage (1-1b) comprend une corde de traction (2) conçue pour relier le dispositif de sauvetage (1-1b) à l'éolienne (5), et le harnais (9, 9b) comprend deux sangles de jambe (10, 11 ; 10b, 11b) et une sangle corporelle (12 ; 12b) qui peut être reliée aux deux sangles de jambe,
**caractérisé par le fait que**
les sangles de jambe (10, 11 ; 10b, 11b) entourent les cuisses d'une personne utilisant le dispositif de sauvetage dans une direction circonférentielle et ne sont pas réglables dans leur taille de circonférence mais ont une circonférence appropriée pour s'adapter à différentes tailles de cuisses.

2. Dispositif de sauvetage selon la revendication 1,
**caractérisé par le fait que**
la sangle corporelle (12 ; 12b) est formée d'une seule pièce.

3. Dispositif de sauvetage selon la revendication 1 à 2,
**caractérisé par le fait que**
chaque sangle de jambe (10, 11 ; 10b, 11b) comprend une boucle (37) à travers laquelle la sangle corporelle (12 ; 12b) est enfilée.

4. Dispositif de sauvetage selon l'une des revendications 1 à 3,
**caractérisé par le fait que**
le harnais (9 ; 9b) est adaptable au corps de la personne à secourir (33), en particulier à sa forme et/ou à sa taille.

5. Dispositif de sauvetage selon l'une des revendications 1 à 4,
**caractérisé par le fait que**
les deux sangles de jambe (10, 11 ; 10b, 11b) sont mobiles dans une direction proximale (36) pour ajuster le harnais au corps de la personne à secourir (33), en particulier à la longueur de son corps.

6. Dispositif de sauvetage selon l'une des revendications 1 à 5,
**caractérisé par le fait que**
la sangle corporelle (12 ; 12b) comprend deux sections de sangle corporelle (27, 28 ; 27b, 28b) qui se croisent sur la face dorsale.

7. Dispositif de sauvetage selon l'une des revendications 1 à 6,
**caractérisé par le fait que**
la sangle corporelle (12 ; 12b) est reliée au parachute au point de croisement de deux sections de sangle corporelle (27, 28 ; 27b, 28b) qui se croisent sur un côté dorsal.

8. Dispositif de sauvetage selon l'une des revendications 1 à 7,
**caractérisé par le fait que**
des sections d'extrémité (31, 32 ; 31 b, 32b) de la sangle corporelle (12 ; 12b) sont mobiles pour ajuster le harnais au corps de la personne à secourir (33), en particulier à sa circonférence corporelle et à sa longueur corporelle, de préférence dans une direction qui comprend une composante de mouvement ventral et/ou latéral..

9. Dispositif de sauvetage selon l'une des revendications 1 à 8,
**caractérisé par le fait que**
la sangle corporelle (12 ; 12b) comprend un moyen de connexion (29 ; 29b) par lequel des sections de la sangle de poitrine (27, 28 ; 27b, 28b) peuvent être connectées l'une à l'autre de manière démontable.

10. Dispositif de sauvetage selon l'une des revendications 1 à 9,
**caractérisé par le fait que**
le parachute est emballé de manière étanche à l'air et/ou aux liquides, de préférence sous vide.

11. Dispositif de sauvetage selon l'une des revendications 1 à 10,
**caractérisé par le fait que**
la harnais (9 ; 9b) et/ou un sac d'emballage (14) contenant le parachute est fait d'un matériau ignifuge ou au moins retardateur d'incendie.

12. Éolienne (5) comprenant un dispositif de sauvetage (1-1b) selon l'une des revendications 1 à 11.

13. Éolienne selon la revendication 12,
**caractérisé par le fait que**
la nacelle (4) ou une pale de rotor creuse de l'éolienne comprend un moyen (7) conçu pour attacher une ligne de traction (2) du dispositif de sauvetage (1-1b).

14. Éolienne selon la revendication 13,
**caractérisé par le fait que**
le moyen de connexion (7) est disposé dans la zone d'une ouverture de sortie (3) de la nacelle (4) ou de la pale de rotor.
